# EUROPEAN PATENT APPLICATION

(11) **EP 3 073 455 A1**
(43) Date of publication of application: **28.09.2016**
(21) Application number: 14810452.4
(22) Date of filing: 16.05.2014
(51) Int. Cl.: G08B 13/00, H04L 29/00

(54) **THEFT DETECTION AND ALARM APPARATUS COORDINATED WITH OTHER SIMILAR DEVICES**

(30) Priority: 10.06.2013 ES 201300526
(71) Applicant: Acedo Sánchez, Eloy Francisco, 13600 Ciudad Real (ES)
(72) Inventor: Acedo Sánchez, Eloy Francisco, 13600 Ciudad Real (ES)
(86) International application number: PCT/ES2014/000078
(87) International publication number: WO 2014/198970

(57) **Abstract**

The security system (9) consists of a computer (1), which centralizes data movement detection means (3), the seismic sensor (4) of the recording night vision LED DOMO camera (2) that allows recording of images with a light that is not perceptible to the human eye. The computer (1) transfers relevant signals via GPRS (7) or radio (8) to neighboring security systems. Through the means of GPRS and wireless security system receives and transmits data. This security system (9) consists of a battery (5) and a solar panel (6) that allows self-sufficiency.

All the above objects are protected by a capsule formed by a bottom (11), which is to be built by armored glass in the part that allows the vertical view of the dome (2) camera, and the rest of metal to protect the security system sabotage. The upper part (12) is also made of glass to allow the entry of light to the solar panel (6). The bottom (11) and upper (12) are joined by a metal joint (13 and 14), of Figure 2 that is the support of the safety system.

Through via GPRS (7) direct contact is established by the center and users. A net is made by the radio (15) as it is explained in figure 4 in which a team which suffers an inhibition sabotage or GPRS network failure, may contact to the central a neighboring team malfunction. These security systems (9) are in constant communication with the alarm centre and users (16).

## Description

Theft detection device and alarm alert coordinated with other similar devices.

### Field and background

A series of video cameras dedicated to hunting in order to detect if a potential prey has been in a certain place at a given moment are already in the market. The device makes a photo or video through a system of motion sensors. Furthermore, there is a version of this device that sends the information via satellite to the mobile phone, allowing the visualization of the image in real time.

Therefore, this device allows checking and monitoring a given area using very few human resources and getting an image of the item in movement.

Using a simple technological system, a continuous surveillance of a given area is achieved in any type of inclement weather.

### Purpose of the Invention

The aim of the invention is a safety system as defined in claim 1. Further objects and advantages are defined in the pending claims 1 to 7.

It is proposed a remote security system with a flattened sphere shape on its vertical axis, comprising:
- A GPRS transmitter and receiver (7) for data transfer via satellite.
- A receptor and radio wave transmitter(8) for the data transfer system.
- A seismic sensor (4), which can detect any type of sabotage, like an impact in the security system of the invention.
- A movement sensor (3), which allows the detection of any unknown person in the area of protection of the safety system.
- A DOMO camera equipped with night vision (2), which allows recording whenever it is necessary for the protection of the security system.
- A computer (1) able to process the information received from the DOME camera, seismic and movement sensors, and transmitting the data by via GPRS or satellite radio.
- A power supply (5) with a storage capacity of the electric power generated by a solar panel (6).
- A system of visual and audible alarm (17), to deter when necessary.

A further object of the invention is a structural support according to the features of claim 2. This support is characterized by a distribution of its four pillars that allows the DOMO camera almost complete vertical view. This support has a bulletproof glass in its vertical portion allowing greater protection of the device to prevent possible sabotage.

### Description of the Drawings

Other features and advantages of the invention will be understood from the following description supported with the attached drawings, referred to non-limiting examples in which:

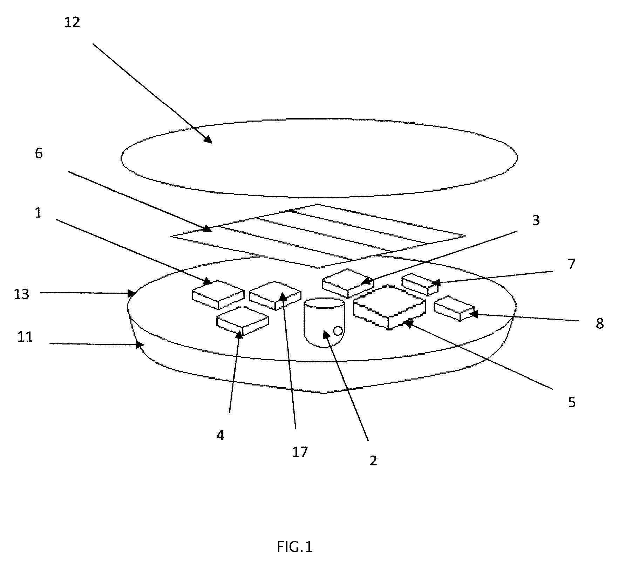

Figure 1 shows schematically a perspective view of the surveillance system.
Figure 2 also illustrates schematically a view of the supportive structure of the monitoring system according to the invention.

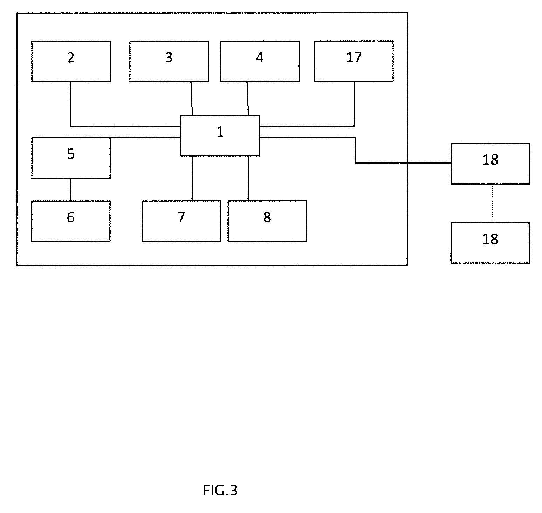

Figure 3 shows a block diagram of the security system of the invention.
Figure 4 illustrates the use of the grouped security systems and the advantages of this arranged connection to be centralized through a center that receives all data sent to individual users.

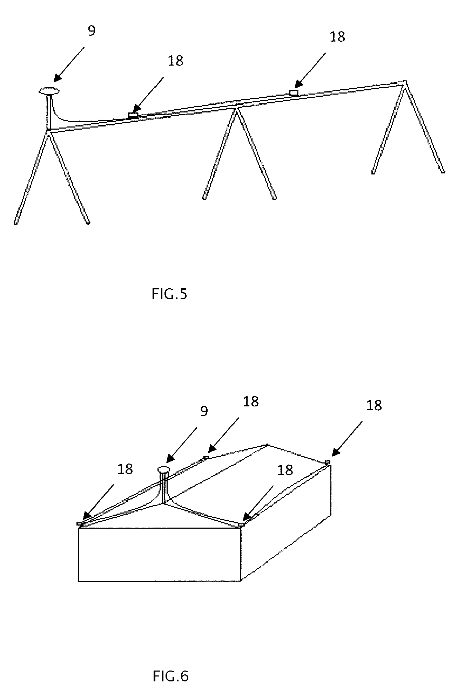

Figure 5 and 6 show the possible use of the security system in a linear or polygonal complex respectively, in which with only a central device incorporating cameras and detectors in series, it is possible to protect a large area.

### Detailed description of a preferred production

The security system (9) consists of a computer (1), which centralizes data movement detection means (3), the seismic sensor (4) of the recording night vision LED DOMO camera (2) that allows the recording of images with a light that is not perceptible to the human eye. The computer (1) transfers relevant signals by via GPRS (7) or radio (8) to neighboring security systems. Through the means of GPRS and wireless security system receives and transmits data. This security system (9) consists of a battery (5) and a solar panel (6) that allows self-sufficiency.

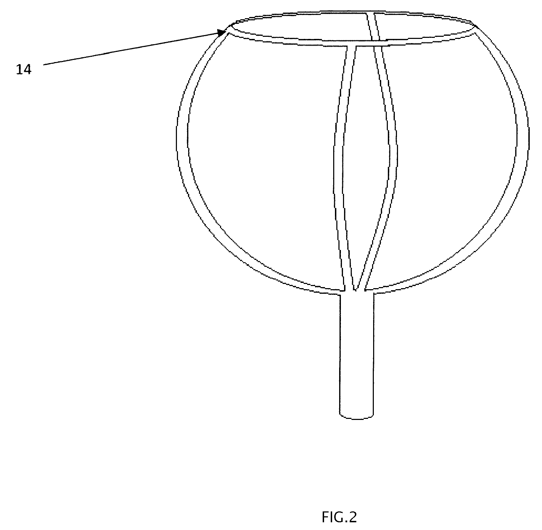

All the objects cited before are protected by a capsule consisting of a semi-spherical armored glass (11),that allows the vertical view of the dome (2) camera, and the rest of metal to protect the security system sabotage. The upper part (12) is also made out of glass to allow the entry of light to the solar panel (6). The bottom (11) and upper (12) are joined by a metal joint (13 and 14), of Figure 2 that is the support of the safety system.

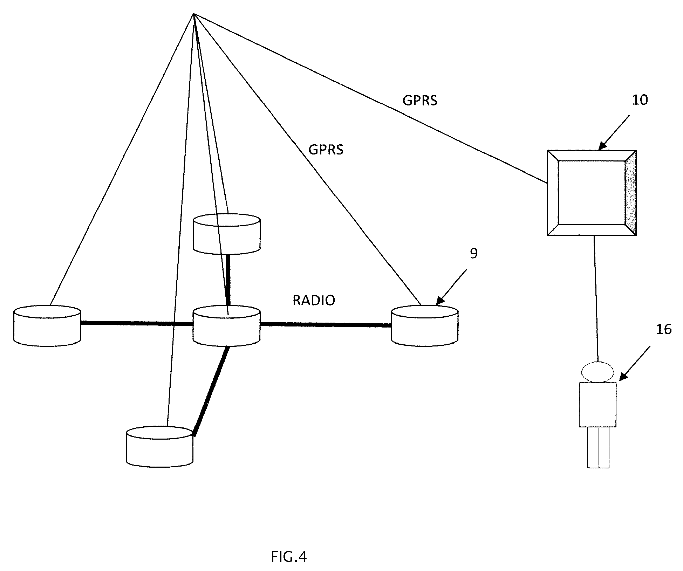

Via GPRS (7) direct contact is established between the alarm centre and users. The net is set by the radio (15) as explained in figure 4 in which a device that suffers an inhibition sabotage or GPRS network failure, will contact to the alarm centre of a neighboring device informing the malfunction. These security systems (9) are in constant communication with the alarm centre and users (16).

### Data transfer

Each time the computer (1) receives a signal given by the movement detector (3), the seismic sensor (4) or due to the lack of communication with the control panel (10); takes a photograph of the guarded area , and sends the data to the alarm centre or user (16) via GPRS (7) or radio (8) to a neighboring security system (9).

### Alarm activation

The security system (9) sends data to the user or alarm centre and, when confirmed a possible threat after a certain time, camera starts recording and activates audible and visual alarm (17). The security system being threatened will emit a bright red light, and neighboring systems will emit a bright blue light.

### Frequency change

The system uses two-way data transmission as a shield against possible attacks of inhibitors, so the computer will have frequency changes to reduce the harmful effects of such actions. In case of a reasonable time of disconnection, the alarm is automatically activated.

### List of references

- 1: computer
- 2: Night vision DOMO camera
- 3: Movement sensor
- 4: Seismic sensor
- 5: Battery
- 6: Solar panel
- 7: Receptor / GPRS transmitter
- 8: Receiver / radio transmitter
- 9: Security system
- 10: Server
- 11: Bottom capsule
- 12: Upper capsule
- 13: Joint capsule
- 14: Structural support
- 15: Mesh via radio
- 16: Users
- 17: Sound and light alarm
- 18: Volumetric sensor and camera, or other kind of sensor

## Claims

1. Theft detection device and alarm alert coordinated with other identical devices where in said device has a computer (1) which controls alarm: a motion sensor (3), a seismic sensor (4), a DOME (2) camera with night light, a transmitter / receiver via GPRS (7) j a transmitter / receiver via radio (8) and an alarm (17) light and sound. Comprises a power supply comprising a battery (5) and a solar panel (6). All this is housed in a capsule (11, 12 and 13).

## Amended claims

### Amended claims under Art. 19.1 PCT

**1.** Theft detection device and alarm alert coordinated with other identical devices, preferably for protecting rural areas, wherein said device has wireless means for transmitting signals to users provided by detection means and interpreted by a computer.

**2.** Theft detection device and alarm alert coordinated with other identical devices according to claim 1, wherein said device has a connection by a receiver and GPRS wave emitter system (7) for transferring data via satellite and while, a receiver and radio wave emitter system (8) for direct data transfer among different devices and coordinated theft detection alarm.

**3.** Theft detection device and alarm coordinated with other identical devices according to claim 1, wherein said device uses a dome camera with night vision (2), which allows recording during any time frame in the guarded area, which combined with a motion sensor (3), allows the detection of an unknown person in the area of protection of the security system and approaching to the required area.

**4.** Theft detection device and alarm coordinated with other identical devices according to claim 1, wherein said device has other sensors that can be coupled out of the capsule.

**5.** Theft detection device and alarm coordinated with other identical devices according to claim 1, wherein said device has a system of visual and audible alarm (17), to deter where relevant coordinated with theft detection devices and alarm neighbors.

**6.** Theft detection device and alarm coordination with other identical devices according to claim 1, wherein said device has a power supply (5) for supply voltage and which in turn is capable of accumulating electric energy generated by a solar panel (6).

**7.** A method for detecting theft and provide the coordinated with other similar equipment, preferably alarm in rural areas, **characterized by** comprising the following steps:
a) Detecting a suspicious movement of theft in the protection zone, by placing in series of several sensors.
b) Recording pictures or video after detecting a suspicious movement.
c) Sending message to the passive user possible theft and neighboring users.
d) Activating by the user or neighbors passive users, system sound and light alarm, the device detection and passive theft neighbors using mobile.
e) Reporting caused damage, theft or attempted.
